# EUROPEAN PATENT APPLICATION

(11) **EP 4 167 317 A1**
(43) Date of publication of application: **19.04.2023**
(21) Application number: 21822065.5
(22) Date of filing: 09.06.2021
(51) Int. Cl.: H01M 4/40, H01M 4/48, H01M 4/485, H01M 4/505, H01M 4/525, H01M 4/58, H01M 10/0562, H01B 1/06, H01B 1/08

(54) **LITHIUM ION-CONDUCTIVE SOLID ELECTROLYTE AND ALL-SOLID-STATE BATTERY**

(30) Priority: 10.06.2020 JP 2020100593
(71) Applicant: Showa Denko K.K., Tokyo 105-8518 (JP)
(72) Inventor: SEI, Ryosuke, Tokyo 105-8518 (JP); LEE, Kunchan, Tokyo 105-8518 (JP)
(74) Representative: Strehl Schübel-Hopf & Partner
(86) International application number: PCT/JP2021/021837
(87) International publication number: WO 2021/251411

(57) **Abstract**

One embodiment of the present invention relates to a lithium ion conductive solid electrolyte or an all-solid-state battery, and the lithium ion conductive solid electrolyte satisfies any of (I) to (III): (I) having a crystal structure based on LiTa₂PO₈ and a crystal structure based on at least one compound selected from LiTa₃O₈, Ta₂O₅, and TaPO₅; (II) being represented by the stoichiometric formula of Liₐ₁Ta_{b1}B_{c1}P_{d1}Oₑ₁ [where 0.5 < a1 < 2.0, 1.0 < b1 ≤ 2.0, 0 < c1 < 0.5, 0.5 < d1 < 1.0, and 5.0 < e1 ≤ 8.0]; (III) being represented by the stoichiometric formula of Liₐ₂Ta_{b2}Ma_{C2}B_{d2}Pₑ₂O_{f2} [where 0.5 < a2 < 2.0, 1.0 < b2 ≤ 2.0, 0 < c2 < 0.5, 0 < d2 < 0.5, 0.5 < e2 < 1.0, and 5.0 < f2 ≤ 8.0, and Ma is one or more elements selected from the group consisting of Nb, Zr, Ga, Sn, Hf, Bi, W, Mo, Si, Al, and Ge].

## Description

### Technical Field

One embodiment of the present invention relates to a lithium ion conductive solid electrolyte or an all-solid-state battery.

### Background Art

In recent years, there has been a demand for the development of a high output and high capacity battery as a power source for, for example, a notebook computer, a tablet terminal, a cellphone, a smartphone or an electric vehicle (EV). Among these, an all-solid-state battery using a solid electrolyte instead of a liquid electrolyte such as an organic solvent has attracted attention as a battery having excellent charge/discharge efficiency, charging speed, safety, and productivity.

As the solid electrolyte, an inorganic solid electrolyte has attracted attention, and as the inorganic solid electrolyte, oxide and sulfide solid electrolytes are mainly known.

When a sulfide solid electrolyte is used, there are advantages such as being able to manufacture a battery by, for example, cold pressing, but it is unstable to humidity and harmful hydrogen sulfide gas may be generated, and thus from the viewpoint of, for example, safety, the development of an oxide solid electrolyte is underway.

Non Patent Literature 1 discloses that as such an oxide solid electrolyte, LiTa₂PO₈, which has a monoclinic crystal structure, exhibits a high lithium ion conductivity (total conductivity (25°C) : 2.5 × 10⁻⁴ S·cm⁻¹).

### Citation List

### Non Patent Literature

Non Patent Literature 1: J. Kim et al., J. Mater. Chem. A, 2018, 6, p22478-22482

### Summary of Invention

### Technical Problem

An oxide solid electrolyte has an extremely high grain boundary resistance, and in order to obtain an ion conductivity that allows use thereof in an all-solid-state battery, a powder of the solid electrolyte material needs to be not only compression molded, but also sintered into a high density solid electrolyte.

When sintering the same, it is desired to obtain a solid electrolyte having a sufficient ion conductivity and relative density even when firing at a low temperature (e.g., 900°C or less) from the viewpoint of, for example, economic efficiency, and equipment; but even when LiTa₂PO₈ disclosed in Non Patent Literature 1 is fired at a low temperature, it is not possible to obtain a solid electrolyte having a high ion conductivity and relative density in good balance.

One embodiment of the present invention provides a lithium ion conductive solid electrolyte having a sufficient ion conductivity and relative density even when the firing temperature when manufacturing the solid electrolyte is low (e.g., 900°C or less).

### Solution to Problem

The present inventors have carried out diligent studies and as a result, have found that the above problem can be solved according to the following configuration examples, and have completed the present invention.

The configuration examples of the present invention are as follows.
[1] A lithium ion conductive solid electrolyte comprising:
   a crystal structure based on LiTa₂PO₈; and
   a crystal structure based on at least one compound selected from LiTa₃O₈, Ta₂O₅, and TaPO₅.
[2] A lithium ion conductive solid electrolyte represented by a stoichiometric formula of Liₐ₁Ta_{b1}B_{c1}P_{d1}Oₑ₁ [where 0.5 < a1 < 2.0, 1.0 < b1 ≤ 2.0, 0 < c1 < 0.5, 0.5 < d1 < 1.0, and 5.0 < e1 ≤ 8.0].
[3] A lithium ion conductive solid electrolyte represented by a stoichiometric formula of Liₐ₂Ta_{b2}Ma_{c2}B_{d2}Pₑ₂O_{f2} [where 0.5 < a2 < 2.0, 1.0 < b2 ≤ 2.0, 0 < c2 < 0.5, 0 < d2 < 0.5, 0.5 < e2 < 1.0, and 5.0 < f2 ≤ 8.0, and Ma is one or more elements selected from the group consisting of Nb, Zr, Ga, Sn, Hf, Bi, W, Mo, Si, Al, and Ge].
[4] The lithium ion conductive solid electrolyte according to any of [1] to [3], wherein a content of a tantalum element is 10.6 to 16.6 atomic %.
[5] The lithium ion conductive solid electrolyte according to any of [1] to [4], wherein a content of a phosphorus element is 5.3 to 8.3 atomic %.
[6] The lithium ion conductive solid electrolyte according to any of [1] to [5], wherein a content of a lithium element is 5.0 to 20.0 atomic %.
[7] The lithium ion conductive solid electrolyte according to any of [1] to [6], wherein the lithium ion conductive solid electrolyte comprises lithium, tantalum, phosphorus, and oxygen as constituent elements and comprises boron as a constituent element.
[8] The lithium ion conductive solid electrolyte according to any of [1] to [7], wherein the lithium ion conductive solid electrolyte comprises one or more elements Ma selected from the group consisting of Nb, Zr, Ga, Sn, Hf, Bi, W, Mo, Si, Al, and Ge as a constituent element.
[9] The lithium ion conductive solid electrolyte according to any of [1] to [8], wherein a relative density, which is a percentage of a ratio of a measured density calculated from a mass and a volume of the lithium ion conductive solid electrolyte to a theoretical density of crystal structures constituting the lithium ion conductive solid electrolyte, is 60% or more.
[10] An all-solid-state battery, comprising:
   a positive electrode having a positive electrode active material;
   a negative electrode having a negative electrode active material; and
   a solid electrolyte layer between the positive electrode and the negative electrode, wherein
   the solid electrolyte layer comprises the lithium ion conductive solid electrolyte according to any of [1] to [9].
[11] The all-solid-state battery according to [10], wherein the positive electrode active material comprises one or more compounds selected from the group consisting of LiM3PO₄ [where M3 is one or more elements selected from the group consisting of Mn, Co, Ni, Fe, Al, Ti, and V, or two elements V and OJ, LiM5VO₄ [where M5 is one or more elements selected from the group consisting of Fe, Mn, Co, Ni, Al, and Ti, Li₂M6P₂O₇ [where M6 is one or more elements selected from the group consisting of Fe, Mn, Co, Ni, Al, Ti, and V, or two elements V and O], LiVP₂O₇, Liₓ₇V_{y7}M7_{z7} [where 2 ≤ x7 ≤ 4, 1 ≤ y7 ≤ 3, 0 ≤ z7 ≤ 1, 1 ≤ y7 + z7 ≤ 3, and M7 is one or more elements selected from the group consisting of Ti, Ge, Al, Ga, and Zr], Li₁₊ₓ₈Alₓ₈M8₂₋ₓ₈(PO₄)₃ [where 0 ≤ x8 ≤ 0.8, and M8 is one or more elements selected from the group consisting of Ti and Ge], LiNi_{1/3}Co_{1/3}Mn_{1/3}O₂, LiCoO₂, LiNiO₂, LiMn₂O₄, Li₂CoP₂O₇, Li₃V₂(PO₄)₃, Li₃Fe₂(PO₄)₃, LiNi_{0.5}Mn_{1.5}O₄, and Li₄Ti₅O₁₂.
[12] The all-solid-state battery according to [10] or [11], wherein the negative electrode active material comprises one or more compounds selected from the group consisting of LiM3PO₄ [where M3 is one or more elements selected from the group consisting of Mn, Co, Ni, Fe, Al, Ti, and V, or two elements V and O], LiM5VO₄ [where M5 is one or more elements selected from the group consisting of Fe, Mn, Co, Ni, Al, and Ti], Li₂M6P₂O₇ [where M6 is one or more elements selected from the group consisting of Fe, Mn, Co, Ni, Al, Ti, and V, or two elements V and O, LiVP₂O₇, Liₓ₇V_{y7}M7_{z7} [where 2 ≤ x7 ≤ 4, 1 ≤ y7 ≤ 3, 0 ≤ z7 ≤ 1, 1 ≤ y7 + z7 ≤ 3, and M7 is one or more elements selected from the group consisting of Ti, Ge, Al, Ga, and Zr], Li₁₊ₓ₈Alₓ₈M8₂₋ₓ₈(PO₄)₃ [where 0 ≤ x8 ≤ 0.8, and M8 is one or more elements selected from the group consisting of Ti and Ge], (Li_{3-a9x9+(5-b9)y9}M9ₓ₉)(V_{1-y9}M10_{y9})O₄ [where M9 is one or more elements selected from the group consisting of Mg, Al, Ga, and Zn, M10 is one or more elements selected from the group consisting of Zn, Al, Ga, Si, Ge, P, and Ti, 0 ≤ x9 ≤ 1.0, 0 ≤ y9 ≤ 0.6, a9 is an average valence of M9, and b9 is an average valence of M10], LiNb₂O₇, Li₄Ti₅O₁₂, Li₄Ti₅PO₁₂, TiO₂, LiSi, and graphite.
[13] The all-solid-state battery according to any of [10] to [12], wherein the positive electrode and the negative electrode comprise the lithium ion conductive solid electrolyte according to any of [1] to [9].

### Advantageous Effects of Invention

According to one embodiment of the present invention, it is possible to provide a solid electrolyte having a sufficient ion conductivity and relative density even when the firing temperature when manufacturing the solid electrolyte is low (e.g., 900°C or less). In addition, by using the lithium ion conductive solid electrolyte according to one embodiment of the present invention, it is possible to easily manufacture an all-solid-state battery including a solid electrolyte having a sufficient ion conductivity while having excellent economic efficiency and suppressing, for example, decomposition, and alteration in quality of another material such as a positive electrode or negative electrode material and while preventing a short circuit of a positive electrode and negative electrode material.

### Brief Description of Drawing

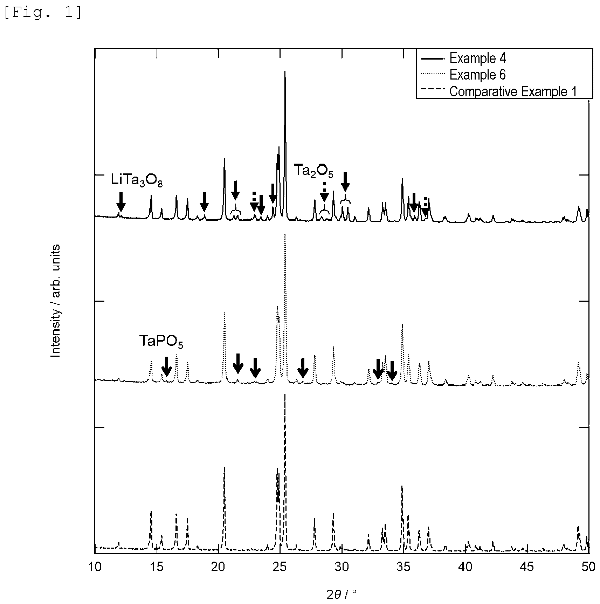

[Figure 1] Figure 1 shows XRD patterns of the solid electrolytes obtained in Examples 4 and 6 and Comparative Example 1.

### Description of Embodiments

### <<Lithium ion conductive solid electrolyte>>

The lithium ion conductive solid electrolyte according to one embodiment of the present invention satisfies any of the following requirements (I) to (III).
Requirement (I): Having a crystal structure based on LiTa₂PO₈ (hereinafter, also referred to as the "LTPO structure") and a crystal structure based on at least one compound selected from LiTa₃O₈, Ta₂O₅, and TaPO₅ (hereinafter, also referred to as the "impurity structure")
Requirement (II): Being represented by the stoichiometric formula of Liₐ₁Ta_{b1}B_{c1}P_{d1}Oₑ₁ [where 0.5 < a1 < 2.0, 1.0 < b1 ≤ 2.0, 0 < c1 < 0.5, 0.5 < d1 < 1.0, and 5.0 < e1 ≤ 8.0]
Requirement (III): Being represented by the stoichiometric formula of Liₐ₂Ta_{b2}Ma_{c2}B_{d2}Pₑ₂O_{f2} [where 0.5 < a2 < 2.0, 1.0 < b2 ≤ 2.0, 0 < c2 < 0.5, 0 < d2 < 0.5, 0.5 < e2 < 1.0, and 5.0 < f2 ≤ 8.0, and Ma is one or more elements selected from the group consisting of Nb, Zr, Ga, Sn, Hf, Bi, W, Mo, Si, Al, and Ge]

The lithium ion conductive solid electrolyte satisfying the requirement (I) is also referred to as "the present solid electrolyte 1," the lithium ion conductive solid electrolyte satisfying the requirement (II) is also referred to as "the present solid electrolyte 2," and the lithium ion conductive solid electrolyte satisfying the requirement (III) is also referred to as "the present solid electrolyte 3."

Hereinafter, the present solid electrolytes 1 to 3 are also collectively simply referred to as "the present solid electrolyte."

The present solid electrolyte 1 preferably satisfies the requirement (II) or the (III).

The present solid electrolytes 2 and 3 each preferably satisfy the requirement (I).

Whether the present solid electrolyte has the LTPO structure and the impurity structure can be determined by analyzing an X-ray diffraction (XRD) pattern, specifically, an XRD pattern measured by the method described in the following Examples.

Specifically, for the solid electrolyte satisfying the requirement (I), an XRD pattern in which a peak derived from the crystal structure of LiTa₂PO₈ disclosed in Non Patent Literature 1 and a peak derived from the crystal structure of at least one compound selected from LiTa₃O₈ (ICSD (Inorganic Crystal Structure Database) code: 493), Ta₂O₅ (ICSD code: 66366), and TaPO₅ (ICSD code: 202041) are added up is observed.

The crystal ratio of the LTPO structure (= crystal quantity of LTPO × 100/total crystal quantity of all confirmed crystals) of the present solid electrolyte is preferably 60% or more, more preferably 70% or more, and further preferably 80% or more, and the upper limit thereof is not particularly limited and is less than 100%.

When the crystal ratio of the LTPO structure of the present solid electrolyte is in the above range, the present electrolyte tends to be a solid electrolyte having a high ion conductivity both within a crystal grain and at a crystal grain boundary, and as a result, a high total ion conductivity and a high relative density.

The crystal ratio of the LTPO structure in the present solid electrolyte can be calculated, for example by carrying out Rietveld analysis of an XRD pattern of the solid electrolyte using the known analysis software RIETAN-FP (available on creator; Fujio Izumi's website "RIETAN-FP/VENUS system distribution file" (http://fujioizumi.verse.jp/download/download.html)).

The crystal ratio of the impurity structure (= crystal quantity of LiTa₃O₈, Ta₂O₅, and TaPO₅ × 100/total crystal quantity of all confirmed crystals) of the present solid electrolyte is preferably 1% or more, more preferably 2% or more, and preferably 40% or less, more preferably 30% or less, from the viewpoint of, for example, being able to further lower the sintering temperature when obtaining a solid electrolyte having a sufficient ion conductivity and relative density.

The present solid electrolytes 2 is represented by the stoichiometric formula of Liₐ₁Ta_{b1}B_{c1}P_{d1}Oₑ₁ [where 0.5 < a1 < 2.0, 1.0 < b1 ≤ 2.0, 0 < c1 < 0.5, 0.5 < d1 < 1.0, and 5.0 < e1 ≤ 8.0] and thus exhibits the advantageous effects, and the present solid electrolytes 3 is represented by the stoichiometric formula of Liₐ₂Ta_{b2}Ma_{c2}B_{d2}Pₑ₂O_{f2} [where 0.5 < a2 < 2.0, 1.0 < b2 ≤ 2.0, 0 < c2 < 0.5, 0 < d2 < 0.5, 0.5 < e2 < 1.0, and 5.0 < f2 ≤ 8.0, and Ma is one or more elements selected from the group consisting of Nb, Zr, Ga, Sn, Hf, Bi, W, Mo, Si, Al, and Ge] and thus exhibits the advantageous effects. When the solid electrolyte 3 includes two or more elements Ma, the c2 is the sum of all the elements Ma.

The relative density of the present solid electrolyte is preferably 60% or more, more preferably 70% or more, and particularly preferably 80% or more.

When the relative density is in the above range, it can be deemed that the present solid electrolyte material has a sufficient relative density.

The relative density is a percentage obtained by dividing the measured density calculated from the mass and the volume of the present solid electrolyte by the theoretical density of the solid electrolyte (measured value of density/theoretical value of density × 100), and specifically can be measured by the method described in the following Examples.

Specifically, the theoretical density of the solid electrolyte is calculated by weight averaging using the theoretical density of each of crystal structures constituting the solid electrolyte and the content of each of the crystal structures. For example, when the solid electrolyte has a crystal structure 1 having a content of h% and a crystal structure 2 having a content of k%, the theoretical density of the solid electrolyte can be calculated by (theoretical density of crystal structure 1 × h + theoretical density of crystal structure 2 × k)/100.

The content of each crystal structure can be determined by Rietveld analysis.

The constituent elements of the present solid electrolyte 1 are not particularly limited as long as the present solid electrolyte 1 includes lithium, tantalum, phosphorus, and oxygen, and from the viewpoint of, for example, being able to further lower the sintering temperature when obtaining a solid electrolyte having a sufficient ion conductivity and relative density, the present solid electrolyte 1 preferably includes the boron element, and may include one or more elements Ma selected from the group consisting of Nb, Zr, Ga, Sn, Hf, Bi, W, Mo, Si, Al, and Ge.

The content of the lithium element in the present solid electrolyte is preferably 5.0 to 20.0 atomic % and more preferably 9.0 to 15.0 atomic %, from the viewpoint of, for example, being a solid electrolyte having a higher lithium ion conductivity.

The content of each element in the present solid electrolyte can be measured, for example, by the absolute intensity quantification method of Auger electron spectroscopy (AES) using a standard powder sample containing Mn, Co, and Ni in a proportion of 1:1:1 as a lithium-containing transition metal oxide such as LiCoO₂. In addition thereto, the content thereof can be determined by a conventionally known quantitative analysis. For example, the content of each element in the present solid electrolyte can be determined using a high frequency inductively coupled plasma (ICP) emission spectrometer after adding an acid to a sample for thermal decomposition and then adjusting the volume of the thermal decomposition product.

The content of the tantalum element in the present solid electrolyte is preferably 10.6 to 16.6 atomic % and more preferably 11.0 to 16.0 atomic %, from the viewpoint of, for example, being a solid electrolyte having a higher lithium ion conductivity.

The content of the phosphorus element in the present solid electrolyte is preferably 5.3 to 8.3 atomic %, more preferably 5.3 atomic % or more and less than 8.3 atomic %, and further preferably 5.8 to 8.0 atomic%, from the viewpoint of, for example, being a solid electrolyte having a higher lithium ion conductivity.

When the present sintered body includes the boron element, the content of the boron element in the present solid electrolyte is preferably 0.1 to 5.0 atomic % and more preferably 0.5 to 3.0 atomic %, from the viewpoint of, for example, being able to further lower the sintering temperature when obtaining a solid electrolyte having a sufficient ion conductivity and relative density.

When the present solid electrolyte 1 or 2 includes the elements Ma, the content of each of the elements Ma in the present solid electrolyte is preferably 0.1 to 5.0 atomic % and more preferably 0.1 to 3.0 atomic %, from the viewpoint that, for example, it tends to be able to further lower the sintering temperature when obtaining a solid electrolyte having a sufficient ion conductivity and relative density.

The total ion conductivity of the present solid electrolyte is preferably 2.00 × 10⁻⁴ S·cm⁻¹ or more, and more preferably 3.00 × 10⁻⁴ S·cm⁻¹ or more.

When the total ion conductivity is in the above range, it can be deemed that the present solid electrolyte has a sufficient ion conductivity.

Specifically, the total ion conductivity can be measured by the method described in the following Examples.

### <Method for producing the present solid electrolyte>

As a method for producing the present solid electrolyte, for example by a method including a step A of sintering a component (Z) including lithium, tantalum, phosphorus, and oxygen as constituent elements, the present solid electrolyte can be produced. In addition, the component (Z) preferably includes the boron element, and may include the element(s) Ma.

The sintering temperature in the step A is preferably 500 to 900°C, more preferably 600 to 900°C, and further preferably 650 to 900°C.

Even when firing is carried out at such a low temperature, a solid electrolyte having a sufficient ion conductivity and relative density can be obtained.

The firing time in the step A depends on the firing temperature, and is preferably 12 to 144 hours and more preferably 48 to 96 hours.

If the firing time is in the above range, even when firing is carried out at a low temperature, a solid electrolyte having a sufficient ion conductivity and relative density can be obtained.

The firing in the step A may be carried out in the atmosphere, and is preferably carried out in an atmosphere of nitrogen gas and/or argon gas in which the oxygen gas content is adjusted in the range of 0 to 20% by volume.

In addition, the firing in the step A may be carried out in a reducing gas atmosphere such as a nitrogen-hydrogen mixed gas including a reducing gas such as hydrogen gas. The ratio of hydrogen gas included in the nitrogen-hydrogen mixed gas is, for example, 1 to 10% by volume. As the reducing gas other than hydrogen gas, for example, ammonia gas, or carbon monoxide gas may be used.

In the step A, it is preferable to fire a molded body obtained by molding the component (Z) and it is preferable to fire a molded body obtained by press molding the component (Z), from the viewpoint of, for example, being able to easily obtain a solid electrolyte having a high ion conductivity and relative density in good balance.

The pressure when press molding the component (Z) is not particularly limited, and is preferably 50 to 500 MPa and more preferably 100 to 400 MPa.

The shape of the molded body is not particularly limited, either, and is preferably a shape according to the intended use of the solid electrolyte obtained.

The component (Z) is preferably produced by a method (I) including a pulverization step of pulverizing (pulverizing and mixing) a material to be pulverized including lithium, tantalum, boron, phosphorus, and oxygen as constituent elements from the viewpoint of, for example, being able to further lower the firing temperature when obtaining a solid electrolyte having a sufficient ion conductivity and relative density.

For example the shape, and size of the component (Z) are not particularly limited, and the component (Z) is preferably in the form of a particle (powder), and the average particle size (D50) of the component (Z) is preferably 0.1 to 10 µm and more preferably 0.1 to 5 µm.

When the D50 of the component (Z) is in the above range, the present solid electrolyte obtained by firing the component tends to have a higher ion conductivity and relative density.

In the pulverization step, it is preferable to pulverize the material to be pulverized such that the component (Z) obtained is made amorphous by a mechanochemical reaction and/or such that the D50 of the component is within the above range.

Examples of the pulverization step include a pulverizing method using, for example, a roll tumbling mill, a ball mill, a small diameter ball mill (bead mill), a medium stirring mill, an air flow pulverizer, a mortar, an automatic kneading mortar, a tank crusher, or a jet mill. Among these, a pulverizing method using a ball mill or a bead mill is preferable, and a pulverizing method using a ball mill using a ball having a diameter of 0.1 to 10 mm is more preferable, from the viewpoint of, for example, being able to easily obtain the present solid electrolyte having a higher ion conductivity and relative density.

The time of the pulverization step is preferably 0.5 to 48 hours and more preferably 2 to 48 hours, from the viewpoint of, for example, being able to easily obtain the component (Z) that is made amorphous by a mechanochemical reaction and/or has a D50 in the above range.

In the pulverization step, the mixing may be carried out while the pulverization is carried out while carrying out heating if necessary, and the pulverization step is usually carried out at room temperature.

In addition, the pulverization step may be carried out in the atmosphere, and is preferably carried out in an atmosphere of nitrogen gas and/or argon gas in which the oxygen gas content is adjusted in the range of 0 to 20% by volume.

The raw material used for the material to be pulverized is preferably an inorganic compound from the viewpoint of ease of handling.

The raw material may be produced and obtained by a conventionally known method, or a commercially available product may be used as the raw material.

Examples of the method (I) include
a method (i) using a compound including a lithium atom, a compound including a tantalum atom, a compound including a boron atom, and a compound including a phosphorus atom, as the material to be pulverized.

In addition, in the method (i), a compound including the element(s) Ma, particularly at least one compound selected from a compound including a niobium atom, a compound including a bismuth atom, and a compound including a silicon atom, may be used from the viewpoint of, for example, being able to further lower the firing temperature when obtaining a solid electrolyte having a sufficient ion conductivity and relative density.

Examples of the compound including a lithium atom include lithium carbonate (Li₂CO₃), lithium oxide (Li₂O), lithium hydroxide (LiOH), lithium acetate (LiCH₃COO), and hydrates thereof. Among these, lithium carbonate, lithium hydroxide, and lithium acetate are preferable in that these are easily decomposed and reacted.

As the compound including a lithium atom, one may be used, or two or more may be used.

Examples of the compound including a tantalum atom include tantalum pentoxide (Ta₂O₅) and tantalum nitrate (Ta(NO₃)₅). Among these, tantalum pentoxide is preferable from the viewpoint of cost.

As the compound including a tantalum atom, one may be used, or two or more may be used.

Examples of the compound including a boron atom include LiBO₂, LiB₃O₅, Li₂B₄O₇, Li₃B₁₁O₁₈, Li₃BO₃, Li₃B₇O₁₂, Li₄B₂O₅, Li₆B₄O₉, L₁₃₋ₓ₅B₁₋ₓ₅Cₓ₅O₃ (0 < x5 <1), Li₄₋ₓ₆B₂₋ₓ₆Cₓ₆O₅ (0 < x6 <2), Li_{2.4}Al_{0.2}BO₃, Li_{2.7}Al_{0.1}BO₃, B₂O₃, and H₃BO₃.

As the compound including a boron atom, one may be used, or two or more may be used.

As the compound including a phosphorus atom, a phosphate is preferable, and examples of the phosphate include diammonium hydrogen phosphate ((NH₄)₂HPO₄) and monoammonium dihydrogen phosphate (NH₄H₂PO₄) in that these are easily decomposed and reacted.

As the compound including a phosphorus atom, one may be used, or two or more may be used.

When the component (Z) includes the element(s) Ma, examples of the compound containing the element(s) Ma include an oxide and a nitrate.

Examples of the compound including a niobium atom as used herein include Nb₂O₅, LiNbO₃, LiNb₃O₈, and NbPO₅.

As the compound including a niobium atom, one may be used, or two or more may be used.

Examples of the compound including a bismuth atom as used herein include LiBiO₂, Li₃BiO₃, Li₄Bi₂O₅, Li_{2.4}Al_{0.2}BiO₃, and Bi₂O₃.

As the compound including a bismuth atom, one may be used, or two or more may be used.

When a compound including the element(s) Ma is used, as the compound including the element(s) Ma, one may be used, or two or more may be used.

When Ma is Nb, examples of the compound including a niobium atom include Nb₂O₅, LiNbO₃, LiNb₃O₈, and NbPO₅.

As the compound including a niobium atom, one may be used, or two or more may be used.

When Ma is Bi, examples of the compound including a bismuth atom include LiBiO₂, Li₃BiO₃, Li₄Bi₂O₅, Li_{2.4}Al_{0.2}BiO₃, and Bi₂O₃.

As the compound including a bismuth atom, one may be used, or two or more may be used.

When Ma is Ga or Sn, examples of the oxide thereof include gallium oxide (Ga₂O₃) and tin oxide (SnO₂), respectively.

When Ma is Zr, Hf, W, or Mo, examples of the oxide thereof include zirconium oxide (ZrO₂), hafnium oxide (HfO₂), tungsten oxide (WO₃), and molybdenum oxide (MoO₃), respectively. When M1 is Zr, Hf, W, or Mo, in addition to the oxide thereof, zirconium hydroxide (Zr(OH)₄), hafnium hydroxide (Hf(OH)₄), tungstic acid (H₂WO₄), and molybdic acid (H₂MoO₄) can also be used from the viewpoint of ease of reaction.

When Ma is Si, examples of the compound including a silicon atom include SiO₂, Li₂SiO₃, Li₂Si₂O₅, Li₂Si₃O₇, Li₄SiO₄, Li₆Si₂O₇, and Li₈SiO₆.

As the compound including a silicon atom, one may be used, or two or more may be used.

When Ma is Ge or Al, examples of the oxide thereof include germanium oxide (GeO₂) and aluminum oxide (Al₂O₃), respectively.

Examples of the compound including a silicon atom as used herein include SiO₂, Li₂SiO₃, Li₂Si₂O₅, Li₂Si₃O₇, Li₄SiO₄, Li₆Si₂O₇, and Li₈SiO₆.

As the compound including a silicon atom, one may be used, or two or more may be used.

For the mixing ratio of the raw materials, these may be mixed, for example, in amounts such that the content of each constituent element in the present solid electrolyte obtained is in the above range, or amounts such that the present solid electrolyte obtained satisfies the stoichiometric formula of the requirement (II) or (III).

In the firing in the step A, a lithium atom is likely to flow out of the system, and thus the compound including a lithium atom may be excessively used by about 10 to 20%.

In the method (i), each raw material may be mixed in advance before the pulverization step, and each raw material is preferably mixed while pulverized (pulverized and mixed) in the pulverization step.

Examples of the method (I) that may be used also include
a method (ii) using a compound (a) including lithium, tantalum, phosphorus, and oxygen as constituent elements and a boron compound (b) (hereinafter, also simply referred to as the compound (b)) as the material to be pulverized, or
a method (iii) using a compound (c) including lithium, tantalum, boron, phosphorus, and oxygen as constituent elements as the material to be pulverized.

In addition, in the methods (ii) and (iii), a compound including the element(s) Ma, particularly at least one compound selected from a compound including a niobium atom, a compound including a bismuth atom, and a compound including a silicon atom, may be further used from the viewpoint of, for example, being able to further lower the firing temperature when obtaining a solid electrolyte having a sufficient ion conductivity and relative density.

In the method (ii), the compound (a) and the compound (b) may be mixed in advance before the pulverization step, and the compound (a) and the compound (b) are preferably mixed while pulverized (pulverized and mixed) in the pulverization step.

### • Compound (a)

The compound (a) is a compound including lithium, tantalum, phosphorus, and oxygen as constituent elements, is preferably an oxide including these elements, and is more preferably a lithium ion conductive compound including these elements.

As the compound (a) used in the method (ii), one may be used, or two or more may be used.

The compound (a) is preferably a compound having a monoclinic structure. Whether the compound (a) has a monoclinic structure can be determined, for example, by Rietveld analysis of XRD pattern of the compound (a), specifically by the method of the following Examples.

Specific examples of the compound (a) include a compound (a1) that includes lithium, tantalum, phosphorus, and oxygen as constituent elements, and may further include one or more elements M1 selected from the group consisting of Bi, Nb, Zr, Ga, Sn, Hf, W, and Mo, and a compound (a2) that includes lithium, tantalum, phosphorus, and oxygen as constituent elements, and may further include one or more elements M2 selected from the group consisting of Si, Al and Ge. Among these, the compound (a) is preferably a compound consisting only of lithium, tantalum, phosphorus, and oxygen as constituent elements, and more preferably LiTa₂PO₈, from the viewpoint of, for example, exerting the advantageous effects of the present invention more.

The compound (a1) is preferably LiTa₂PO₈ or a compound obtained by replacing a part of Ta of LiTa₂PO₈ with the element(s) M1, and preferably has a monoclinic structure.

The compound (a1) is specifically preferably a compound represented by the composition formula Li[_{1+(5-a)g]}Ta_{2-g}M1_{g}PO₈ [where M1 is one or more elements M1 selected from the group consisting of Bi, Nb, Zr, Ga, Sn, Hf, W, and Mo, 0 ≤ g < 1.0, and a is an average valence of M1].

Nb, Bi, W, and Mo are more preferable, Nb, Bi, and W are further preferable, and Nb is particularly preferable as M1, from the viewpoint of, for example, increasing the lithium ion conductivity at a crystal grain boundary in the present solid electrolyte obtained by using the compound (a).

The g is preferably 0.95 or less, more preferably 0.90 or less, further preferably 0.85 or less, more preferably 0.80 or less, and particularly preferably 0.75 or less.

When g is in the above range, the lithium ion conductivity at a crystal grain boundary tends to be high in the present solid electrolyte obtained by using the compound (a) .

Depending on the valence and content of M1, the amount of Li varies according to the average valence of M1 such that the charge neutrality of the compound (a) described above can be obtained. The average valence represented by the a can be determined as follows. When M1 is composed of two or more elements, the a is calculated by weighted averaging using the valence of each element and the content of each element. For example, when M1 is composed of 80 atomic % Nb and 20 atomic % Zr, a is calculated as (+5 × 0.8) + (+4 × 0.2) = +4.8. In addition, when M1 is composed of 80 atomic % Nb and 20 atomic % W, a is calculated as (+5 × 0.8) + (+6 × 0.2) = +5.2.

The compound (a2) is preferably LiTa₂PO₈ or a compound obtained by replacing a part of P of LiTa₂PO₈ with the element(s) M2, and preferably has a monoclinic structure.

The compound (a2) is specifically preferably a compound represented by the composition formula Li[_{1+(5-b)k}]Ta₂P₁₋ₖM2ₖO₈ [where M2 is one or more elements M2 selected from the group consisting of Si, Al, and Ge, 0 ≤ k < 0.7, and b is an average valence of M2].

Si and Al are more preferable, and Si is further preferable as M2, from the viewpoint of, for example, increasing the lithium ion conductivity at a crystal grain boundary in the present solid electrolyte obtained by using the compound (a).

The k is preferably 0.65 or less, more preferably 0.60 or less, and further preferably 0.55 or less.

When k is in the above range, the total ion conductivity, which is the sum of the lithium ion conductivity within a crystal grain and the lithium ion conductivity at a crystal grain boundary, tends to be high in the present solid electrolyte obtained by using the compound (a) .

The average valence represented by the b can be determined in the same manner as in the method for calculating the average valence a described above.

The method for producing the compound (a) is not particularly limited, and for example, a conventionally known production method such as a solid phase reaction or a liquid phase reaction can be adopted. Specific examples of the method for producing the compound (a) include a method including at least a mixing step and a firing step each in one stage.

Examples of the mixing step in the method for producing the compound (a) include a step of mixing a compound including a lithium atom (e.g., an oxide or a carbonate), a compound including a tantalum atom (e.g., an oxide or a nitrate), a compound including a phosphorus atom (e.g., an ammonium salt), and, if necessary, a compound including the elements M1 (e.g., an oxide) and/or a compound including the elements M2 (e.g., an oxide), which are raw materials.

As each of the raw materials, one may be used, or two or more may be used.

Examples of the method for mixing the raw materials include a mixing method using, for example, a roll tumbling mill, a ball mill, a small diameter ball mill (bead mill), a medium stirring mill, an air flow pulverizer, a mortar, an automatic kneading mortar, a tank crusher, or a jet mill.

For the mixing ratio of the raw materials, these may be mixed, for example, at a stoichiometric ratio so as to obtain a desired composition of the compound (a).

In the firing step described later, a lithium atom is likely to flow out of the system, and thus the compound including a lithium atom may be excessively used by about 10 to 20%. In addition, in the firing step described later, in order to suppress the generation of a by-product, the compound including a phosphorus atom may be excessively used by about 1 to 10%.

In the mixing, the mixing may be carried out while carrying out heating if necessary, and the mixing is usually carried out at room temperature.

In addition, the mixing may be carried out in the atmosphere, and is preferably carried out in an atmosphere of nitrogen gas and/or argon gas in which the oxygen gas content is adjusted in the range of 0 to 20% by volume.

In the firing step in the method for producing the compound (a), the mixture obtained in the mixing step is fired. When the firing step is carried out a plurality of times, a pulverization step using, for example, a ball mill, or a mortar may be provided for the purpose of pulverizing or reducing the particle size of the fired product obtained in the firing step. In particular, the compound (a) has a low reaction rate of phase formation, and thus a reaction intermediate may be present in the first firing. In this case, it is preferable to carry out the first firing, carry out the pulverization step, and then further carry out the firing step.

The firing step may be carried out in the atmosphere, and is preferably carried out in an atmosphere of nitrogen gas and/or argon gas in which the oxygen gas content is adjusted in the range of 0 to 20% by volume.

The firing temperature depends on the firing time, and is preferably 800 to 1200°C, more preferably 950 to 1100°C, and further preferably 950 to 1000°C.

When the firing temperature is in the above range, a lithium atom is less likely to flow out of the system, and the compound (a) having a high ion conductivity tends to be easily obtained.

The firing time (the total firing time when the firing step is carried out several times) depends on the firing temperature, and is preferably 1 to 16 hours and more preferably 3 to 12 hours.

When the firing time is in the above range, a lithium atom is less likely to flow out of the system, and a compound having a high ion conductivity tends to be easily obtained.

If the fired product obtained after the firing step is left in the atmosphere, the fired product may absorb moisture or react with carbon dioxide to alter in quality. Because of this, the fired product obtained after the firing step is preferably transferred into a dehumidified inert gas atmosphere and stored when the temperature thereof drops to 200°C or less in temperature lowering after the firing step.

### • Boron compound (b)

The boron compound (b) is a compound different from the compound (a).

As the compound (b) used in the method (ii), one may be used, or two or more may be used.

From the viewpoint of ease of handling, the compound (b) is preferably an inorganic compound, more preferably a compound including lithium or hydrogen as a constituent element, and further preferably a complex oxide including lithium as a constituent element.

The compound (b) may be produced and obtained by a conventionally known method, or a commercially available product may be used as the compound (b).

The compound (b) is preferably a crystalline compound. Whether the compound (b) is a crystalline compound can be determined, for example, from an X-ray diffraction (XRD) pattern of the compound (b).

Examples of the boron compound include LiBO₂, LiB₃O₅, Li₂B₄O₇, Li₃B₁₁O₁₈, Li₃BO₃, Li₃B₇O₁₂, Li₄B₂O₅, Li₆B₄O₉, Li₃₋ₓ₅B_{1-X5}C_{X5}O₃ (0 < x5 <1), Li₄₋ₓ₆B₂₋ₓ₆Cx₆O₅ (0 < x6 <2), Li_{2.4}Al_{0.2}BO₃, Li_{2.7}Al_{0.1}BO₃, B₂O₃, and H₃BO₃.

In the method (ii), the compound (a) and the compound (b) are preferably used in amounts such that the content of each constituent element in the present solid electrolyte obtained is in the above range, or amounts such that the present solid electrolyte obtained satisfies the stoichiometric formula of the requirement (II) or (III).

### • Compound (c)

The compound (c) is a compound including lithium, tantalum, boron, phosphorus, and oxygen as constituent elements, is preferably an oxide including these elements, and is more preferably a lithium ion conductive compound including these elements.

In addition, the compound (c) may include the element(s) Ma.

The compound (c) is preferably a compound having a monoclinic structure. Whether the compound (c) has a monoclinic structure can be determined, for example, by Rietveld analysis of an X-ray diffraction (XRD) pattern of the compound (c), specifically by the method of the following Examples.

The method for producing the compound (c) is not particularly limited, and for example, a conventionally known production method such as a solid phase reaction or a liquid phase reaction can be adopted. Specific examples of the method for producing the compound (c) include a method including at least a mixing step and a firing step each in one stage.

Examples of the mixing step in the method for producing the compound (c) include a step of mixing a compound including a lithium atom (e.g., an oxide, a hydroxide, a carbonate, or an acetate), a compound including a tantalum atom (e.g., an oxide or a nitrate), a compound including a boron atom (e.g., an oxide), a compound including a phosphorus atom (e.g., an ammonium salt), and if necessary, a compound including the metal Ma (e.g., an oxide or a nitrate), which are raw materials. The compound (b) may be used as the compound including a boron atom.

As each of the raw materials, one may be used, or two or more may be used.

For the mixing ratio of the raw materials, these may be mixed, for example, in amounts such that the content of each constituent element in the present solid electrolyte obtained is in the above range, or amounts such that the present solid electrolyte obtained satisfies the stoichiometric formula of the requirement (II) or (III).

In the firing in the step (A), a lithium atom is likely to flow out of the system, and thus the compound including a lithium atom may be excessively used by about 10 to 20%. In addition, in the firing step described later, in order to suppress the generation of a by-product, the compound including a phosphorus atom may be excessively used by about 1 to 10%.

Examples of the method for mixing the raw materials and the conditions (for example temperature, and atmosphere) at the time of mixing include the same method and conditions as in the mixing step when producing the compound (a).

In the firing step in the method for producing the compound (c), the mixture obtained in the mixing step is fired. When the firing step is carried out a plurality of times, a pulverization step using, for example, a ball mill, or a mortar may be provided for the purpose of pulverizing, or reducing the particle size of, the fired product obtained in the firing step, and the compound (c) has a high reaction rate of phase formation, as different from when producing the compound (a), and thus the desired compound (c) can be produced by carrying out the firing step once, and thus the compound (c) can preferably be produced by carrying out the firing step once.

Examples of the conditions (for example temperature, time, and atmosphere) in the firing step include the same conditions as in the firing step when producing the compound (a), and for the same reason as in the production of the compound (a), the fired product obtained after the firing step is preferably transferred into a dehumidified inert gas atmosphere and stored as when producing the compound (a).

### <<All-solid-state battery>>

The all-solid-state battery according to one embodiment of the present invention (hereinafter, also referred to as "the present battery") includes a positive electrode having a positive electrode active material, a negative electrode having a negative electrode active material, and a solid electrolyte layer between the positive electrode and the negative electrode, wherein the solid electrolyte layer includes the present solid electrolyte.

The present battery may be a primary battery or a secondary battery, and is preferably a secondary battery and more preferably a lithium ion secondary battery, from the viewpoint of, for example, exerting the advantageous effects of the present invention more.

The structure of the present battery is not particularly limited as long as the present battery include a positive electrode, a negative electrode, and a solid electrolyte layer between the positive electrode and the negative electrode, and may be a so-called thin film type, laminated type, or bulk type.

### <Solid electrolyte layer>

The solid electrolyte layer is not particularly limited as long as the solid electrolyte layer includes the present solid electrolyte, and if necessary, may include a conventionally known additive used for the solid electrolyte layer of the all-solid-state battery, and the solid electrolyte layer preferably consists of the present solid electrolyte.

The thickness of the solid electrolyte layer may be appropriately selected according to the structure (for example thin film type) of the battery to be formed, and is preferably 50 nm to 1000 µm and more preferably 100 nm to 100 pm.

### <Positive electrode>

The positive electrode is not particularly limited as long as the positive electrode has a positive electrode active material, and preferable examples thereof include a positive electrode having a positive electrode current collector and a positive electrode active material layer.

### [Positive electrode active material layer]

The positive electrode active material layer is not particularly limited as long as the positive electrode active material layer includes a positive electrode active material, and the positive electrode active material layer preferably includes a positive electrode active material and a solid electrolyte and may further include an additive such as an electrically conductive aid or a sintering aid.

The thickness of the positive electrode active material layer may be appropriately selected according to the structure (for example thin film type) of the battery to be formed, and is preferably 10 to 200 pm, more preferably 30 to 150 pm, and further preferably 50 to 100 pm.

### • Positive electrode active material

Examples of the positive electrode active material include LiCo oxide, LiNiCo oxide, LiNiCoMn oxide, LiNiMn oxide, LiMn oxide, LiMn spinel, LiMnNi oxide, LiMnAl oxide, LiMnMg oxide, LiMnCo oxide, LiMnFe oxide, LiMnZn oxide, LiCrNiMn oxide, LiCrMn oxide, lithium titanate, metal lithium phosphate, a transition metal oxide, titanium sulfide, graphite, hard carbon, a transition metal-containing lithium nitride, silicon oxide, lithium silicate, lithium metal, a lithium alloy, a Li-containing solid solution, and a lithium-storing intermetallic compound.

Among these, LiNiCoMn oxide, LiNiCo oxide, and LiCo oxide are preferable, and LiNiCoMn oxide is more preferable, from the viewpoint of, for example, having a good affinity with a solid electrolyte, having an excellent balance of macroscopic electrical conductivity, microscopic electrical conductivity, and ion conductivity, having a high average potential, and being able to increase the energy density or battery capacity in the balance between specific capacity and stability.

In addition, the surface of the positive electrode active material may be coated with, for example, an ion conductive oxide such as lithium niobate, lithium phosphate, or lithium borate.

As the positive electrode active material used for the positive electrode active material layer, one may be used or two or more may be used.

Preferable examples of the positive electrode active material also include LiM3PO₄ [where M3 is one or more elements selected from the group consisting of Mn, Co, Ni, Fe, Al, Ti, and V, or two elements V and O], LiM5VO₄ [where M5 is one or more elements selected from the group consisting of Fe, Mn, Co, Ni, Al, and Ti], Li₂M6P₂O₇ [where M6 is one or more elements selected from the group consisting of Fe, Mn, Co, Ni, Al, Ti, and V, or two elements V and OJ, L1VP₂O₇, Liₓ₇V_{y7}M7_{z7} [where 2 ≤ x7 ≤ 4, 1 ≤ y7 ≤ 3, 0 ≤ z7 ≤ 1, 1 ≤ y7 + z7 ≤ 3, and M7 is one or more elements selected from the group consisting of Ti, Ge, Al, Ga, and Zr], Li₁₊ₓ₈Alₓ₈M8₂₋ₓ₈(PO₄)₃ [where 0 ≤ x8 ≤ 0.8, and M8 is one or more elements selected from the group consisting of Ti and Ge], LiNi_{1/3}Co_{1/3}Mn_{1/3}O₂, LiCoO₂, LiNiO₂, LiMn₂O₄, Li₂CoP₂O₇, Li₃V₂(PO₄)₃, Li₃Fe₂(PO₄)₃, LiNi_{0.5}Mn_{1.5}O₄, and Li₄Ti₅O₁₂.

The positive electrode active material is preferably in the form of a particle. The 50% diameter in the volume-based particle size distribution thereof is preferably 0.1 to 30 pm, more preferably 0.3 to 20 pm, further preferably 0.4 to 10 pm, and particularly preferably 0.5 to 3 µm.

In addition, the ratio of the length of the major axis to the length of the minor axis (length of the major axis/length of the minor axis), that is, the aspect ratio, of the positive electrode active material is preferably less than 3 and more preferably less than 2.

The positive electrode active material may form a secondary particle. In that case, the 50% diameter in the number-based particle size distribution of the primary particle is preferably 0.1 to 20 pm, more preferably 0.3 to 15 pm, further preferably 0.4 to 10 pm, and particularly preferably 0.5 to 2 pm.

The content of the positive electrode active material in the positive electrode active material layer is preferably 20 to 80% by volume and more preferably 30 to 70% by volume.

When the content of the positive electrode active material is in the above range, the positive electrode active material functions favorably, and a battery having a high energy density tends to be able to be easily obtained.

### • Solid electrolyte

The solid electrolyte that can be used for the positive electrode active material layer is not particularly limited, and a conventionally known solid electrolyte can be used, and the present solid electrolyte is preferably used from the viewpoint of, for example, exerting the advantageous effects of the present invention more.

As the solid electrolyte used for the positive electrode active material layer, one may be used or two or more may be used.

### • Additives

Preferable examples of the electrically conductive aid include a metal material such as Ag, Au, Pd, Pt, Cu, or Sn, and a carbon material such as acetylene black, ketjen black, a carbon nanotube, or a carbon nanofiber.

As the sintering aid, the same compounds as for the compound (b), a compound including a niobium atom, a compound including a bismuth atom, and a compound including a silicon atom are preferable.

As each additive used for the positive electrode active material layer, one may be used or two or more may be used.

### • Positive electrode current collector

The positive electrode current collector is not particularly limited as long as the material thereof is one that conducts an electron without causing an electrochemical reaction. Examples of the material of the positive electrode current collector include a simple substance of a metal such as copper, aluminum, or iron, an alloy including any of these metals, and an electrically conductive metal oxide such as antimony-doped tin oxide (ATO) or tin-doped indium oxide (ITO).

As the positive electrode current collector, a current collector obtained by providing an electrically conductive adhesive layer on the surface of an electric conductor can also be used. Examples of the electrically conductive adhesive layer include a layer including, for example, a granular electrically conductive material, or a fibrous electrically conductive material.

### <Negative electrode>

The negative electrode is not particularly limited as long as the negative electrode has a negative electrode active material, and preferable examples thereof include a negative electrode having a negative electrode current collector and a negative electrode active material layer.

### [Negative electrode active material layer]

The negative electrode active material layer is not particularly limited as long as the negative electrode active material layer includes a negative electrode active material, and the negative electrode active material layer preferably includes a negative electrode active material and a solid electrolyte and may further include an additive such as an electrically conductive aid or a sintering aid.

The thickness of the negative electrode active material layer may be appropriately selected according to the structure (for example thin film type) of the battery to be formed, and is preferably 10 to 200 pm, more preferably 30 to 150 pm, and further preferably 50 to 100 pm.

### • Negative electrode active material

Examples of the negative electrode active material include a lithium alloy, a metal oxide, graphite, hard carbon, soft carbon, silicon, a silicon alloy, silicon oxide SiOₙ (0 < n ≤ 2), a silicon/carbon composite material, a composite material including a silicon domain within a pore of porous carbon, lithium titanate, and graphite coated with lithium titanate.

Among these, a silicon/carbon composite material and a composite material including a silicon domain in a pore of porous carbon are preferable because these have a high specific capacity and can increase the energy density and the battery capacity. A composite material including a silicon domain in a pore of porous carbon is more preferable, has excellent alleviation of volume expansion associated with lithium storage/release by silicon, and can maintain the balance of macroscopic electrical conductivity, microscopic electrical conductivity, and ion conductivity well. A composite material including a silicon domain in a pore of porous carbon in which the silicon domain is amorphous, the size of the silicon domain is 10 nm or less, and the pore derived from the porous carbon is present in the vicinity of the silicon domain is particularly preferable.

Preferable examples of the negative electrode active material also include LiM3PO₄ [where M3 is one or more elements selected from the group consisting of Mn, Co, Ni, Fe, Al, Ti, and V, or two elements V and O], LiM5VO₄ [where M5 is one or more elements selected from the group consisting of Fe, Mn, Co, Ni, Al, and Ti], Li₂M6P₂O₇ [where M6 is one or more elements selected from the group consisting of Fe, Mn, Co, Ni, Al, Ti, and V, or two elements V and OJ, L1VP₂O₇, Liₓ₇V_{y7}M7_{z7} [where 2 ≤ x7 ≤ 4, 1 ≤ y7 ≤ 3, 0 ≤ z7 ≤ 1, 1 ≤ y7 + z7 ≤ 3, and M7 is one or more elements selected from the group consisting of Ti, Ge, Al, Ga, and Zr], Li₁₊ₓ₈Alₓ₈M8₂₋ₓ₈(PO₄)₃ [where 0 ≤ x8 ≤ 0.8, and M8 is one or more elements selected from the group consisting of Ti and Ge], (Li_{3-a9x9+(5-b9)y9}M9ₓ₉)(V_{1-y9}M10_{y9})O₄ [where M9 is one or more elements selected from the group consisting of Mg, Al, Ga, and Zn, M10 is one or more elements selected from the group consisting of Zn, Al, Ga, Si, Ge, P, and Ti, 0 ≤ x9 ≤ 1.0, 0 ≤ y9 ≤ 0.6, a9 is an average valence of M9, and b9 is an average valence of M10], LiNb₂O₇, Li₄Ti₅O₁₂, Li₄Ti₅PO₁₂, TiO₂, LiSi, and graphite.

The negative electrode active material is preferably in the form of a particle. The 50% diameter in the volume-based particle size distribution thereof, the aspect ratio, and the 50% diameter in the number-based particle size distribution of a primary particle when the negative electrode active material forms a secondary particle are preferably in the same ranges as for the positive electrode active material.

The content of the negative electrode active material in the negative electrode active material layer is preferably 20 to 80% by volume and more preferably 30 to 70% by volume.

When the content of the negative electrode active material is in the above range, the negative electrode active material functions favorably, and a battery having a high energy density tends to be able to be easily obtained.

### • Solid electrolyte

The solid electrolyte that can be used for the negative electrode active material layer is not particularly limited, and a conventionally known solid electrolyte can be used, and the present solid electrolyte is preferably used from the viewpoint of, for example, exerting the advantageous effects of the present invention more.

As the solid electrolyte used for the negative electrode active material layer, one may be used or two or more may be used.

### • Additives

Preferable examples of the electrically conductive aid include a metal material such as Ag, Au, Pd, Pt, Cu, or Sn, and a carbon material such as acetylene black, ketjen black, a carbon nanotube, or a carbon nanofiber.

As the sintering aid, the same compounds as for the compound (b), a compound including a niobium atom, a compound including a bismuth atom, and a compound including a silicon atom are preferable.

As each additive used for the negative electrode active material layer, one may be used or two or more may be used.

### • Negative electrode current collector

As the negative electrode current collector, the same current collector as for the positive electrode current collector can be used.

### <Method for producing all-solid-state battery>

The all-solid-state battery can be formed, for example, by a known powder molding method. For example, the positive electrode current collector, a powder for the positive electrode active material layer, a powder for the solid electrolyte layer, a powder for the negative electrode active material layer, and the negative electrode current collector are stacked in this order, these are powder molded at the same time, and thereby formation of each layer of the positive electrode active material layer, the solid electrolyte layer, and the negative electrode active material layer, and connection between any adjacent two of the positive electrode current collector, the positive electrode active material layer, the solid electrolyte layer, the negative electrode active material layer, and the negative electrode current collector can be carried out at the same time.

When carrying out this powder molding, it is preferable to carry out firing at the same temperature as the firing temperature in the step A while applying a pressure comparable to the pressure when press molding is carried out in the step A.

According to one embodiment of the present invention, even if the firing temperature when manufacturing the all-solid-state battery is low, an all-solid-state battery exhibiting a sufficient ion conductivity can be obtained, and thus it is possible to manufacture an all-solid-state battery with excellent economic efficiency and equipment saving while suppressing, for example, decomposition, and alteration in quality of another material such as a positive electrode or negative electrode material.

Each layer of the positive electrode active material layer, the solid electrolyte layer, and the negative electrode active material layer may be powder molded, and when an all-solid-state battery is manufactured using each of the obtained layers, each of the layers is preferably pressed to carry out firing.

In addition, the all-solid-state battery can also be manufactured, for example, by the following method.

For example a solvent, and/or a resin are(is) appropriately mixed into a material for positive electrode active material layer formation, a material for solid electrolyte layer formation, and a material for negative electrode active material layer formation to prepare pastes for formation of the layers, respectively, and the pastes are applied onto base sheets, respectively, and dried to manufacture a green sheet for the positive electrode active material layer, a green sheet for the solid electrolyte layer, and a green sheet for the negative electrode active material layer. Next, the green sheet for the positive electrode active material layer, the green sheet for the solid electrolyte layer, and the green sheet for the negative electrode active material layer from each of which the base sheet is peeled off are sequentially laminated, thermocompression bonded at a predetermined pressure, and then enclosed in a container and pressurized by, for example, hot isostatic pressing, cold isostatic pressing, or isostatic pressing to manufacture a laminated structure.

After that, if necessary, the laminated structure is subjected to degreasing treatment at a predetermined temperature and then to firing treatment to manufacture a laminated sintered body.

The firing temperature in this firing treatment is preferably the same as the firing temperature in the step A.

Next, if necessary, an all-solid-state battery can also be manufactured by forming a positive electrode current collector and a negative electrode current collector on both principal surfaces of the laminated sintered body by, for example, a sputtering method, a vacuum vapor deposition method, or application or dipping of a metal paste.

### Examples

Hereinafter, the present invention will be specifically described based on Examples. The present invention is not limited to these Examples.

### [Synthesis Example 1] Synthesis of Li4B₂O₅

Lithium hydroxide monohydrate (LiOH•H₂O) (manufactured by FUJIFILM Wako Pure Chemical Corporation, purity of 98.0% or more) and boric acid (H₃BO₃) (manufactured by FUJIFILM Wako Pure Chemical Corporation, purity of 99.5% or more) were weighed such that the ratio of the numbers of atoms of lithium and boron (Li:B) was 2.00:1.00. The raw material powders thereof weighed were pulverized and mixed in an agate mortar for 15 minutes to obtain a mixture.

The obtained mixture was placed in an alumina boat, and the temperature thereof was raised to 500°C under a condition of a temperature rise rate of 10°C/min in an atmosphere of air (flow rate: 100 mL/min) using a rotary firing furnace (manufactured by Motoyama Co., Ltd.), and the mixture was fired at 500°C for 2 hours to obtain a primary fired product.

The obtained primary fired product was pulverized and mixed in an agate mortar for 15 minutes, the obtained mixture was placed in an alumina boat, and the temperature thereof was raised to 630°C under a condition of a temperature rise rate of 10°C/min in an atmosphere of air (flow rate: 100 mL/min) using a rotary firing furnace (manufactured by Motoyama Co., Ltd.), and the mixture was fired at 630°C for 24 hours to obtain a secondary fired product (Li₄B₂O₅).

The temperature of the obtained secondary fired product was lowered to room temperature, then taken out from the rotary firing furnace, transferred into a dehumidified nitrogen gas atmosphere, and stored.

### [Synthesis Example 2] Synthesis of Li₃BO₃

A secondary fired product (Li₃BO₃) was obtained in the same manner as in Synthesis Example 1 except that lithium hydroxide monohydrate (LiOH•H₂O) (manufactured by FUJIFILM Wako Pure Chemical Corporation, purity of 98.0% or more) and boric acid (H₃BO₃) (manufactured by FUJIFILM Wako Pure Chemical Corporation, purity of 99.5% or more) were weighed such that the ratio of the numbers of atoms of lithium and boron (Li:B) was 3.00:1.00.

### [Example 1]

An appropriate amount of toluene was added to tantalum pentoxide (Ta₂O₅) (manufactured by FUJIFILM Wako Pure Chemical Corporation, purity of 99.9%), and Ta₂O₅ was pulverized for 2 hours using a zirconia ball mill (zirconia ball: diameter of 3 mm) .

Next, lithium carbonate (Li₂CO₃) (manufactured by Sigma-Aldrich, Inc., purity 99.0% or more), the pulverized tantalum pentoxide (Ta₂O₅), Li₄B₂O₅ obtained in Synthesis Example 1 described above, and diammonium hydrogen phosphate ((NH₄)₂HPO₄) (manufactured by Sigma-Aldrich, Inc., purity of 98% or more) were weighed such that the ratio of the numbers of atoms of lithium, tantalum, boron, and phosphorus (Li:Ta:B:P) satisfied the stoichiometric formula shown in Table 1. An appropriate amount of toluene was added to the raw material powders thereof weighed, and these were pulverized and mixed for 2 hours using a zirconia ball mill (zirconia ball: diameter of 1 mm) to obtain a mixture.

Using a tableting machine, a pressure of 40 MPa was applied with a hydraulic press to the obtained mixture to form a disk-shaped tableted body having a diameter of 10 mm and a thickness of 1 mm, and next, a pressure of 300 MPa was applied to the disk-shaped tableted body by CIP (cold isostatic pressing) to manufacture a pellet.

The obtained pellet was placed in an alumina boat, and the temperature thereof was raised to 850°C under a condition of a temperature rise rate of 10°C/min in an atmosphere of air (flow rate: 100 mL/min) using a rotary firing furnace (manufactured by Motoyama Co., Ltd.), and the pellet was fired at the above temperature for 96 hours to obtain a sintered body.

The temperature of the obtained sintered body was lowered to room temperature, then taken out from the rotary firing furnace, transferred into a dehumidified nitrogen gas atmosphere, and stored to obtain a solid electrolyte.

### [Examples 2 to 4]

Solid electrolytes were manufactured in the same manner as in Example 1 except that the mixing ratios of the raw materials were changed such that the ratios of the numbers of atoms of lithium, tantalum, boron, and phosphorus satisfied the stoichiometric formulas shown in Table 1.

### [Example 5]

A solid electrolyte was manufactured in the same manner as in Example 1 except that Li₃BO₃ obtained in Synthesis Example 2 described above was used instead of Li₄B₂O₅, and each raw material powder was used such that the ratio of the numbers of atoms of lithium, tantalum, boron, and phosphorus satisfied the stoichiometric formula shown in Table 1.

### [Example 6]

A solid electrolyte was manufactured in the same manner as in Example 1 except that boric acid (H₃BO₃) (manufactured by FUJIFILM Wako Pure Chemical Corporation, purity of 99.5% or more) was used instead of Li₄B₂O₅, and each raw material powder was used such that the ratio of the numbers of atoms of lithium, tantalum, boron, and phosphorus satisfied the stoichiometric formula shown in Table 1.

### [Examples 7 and 8]

An appropriate amount of toluene was added to niobium pentoxide (Nb₂O₅) (manufactured by FUJIFILM Wako Pure Chemical Corporation, purity of 99.9%), and Nb₂O₅ was pulverized for 2 hours using a zirconia ball mill (zirconia ball: diameter of 3 mm) .

Solid electrolytes were manufactured in the same manner as in Example 1 except that in Example 1, the pulverized niobium pentoxide (Nb₂O₅) was further used, and each raw material powder was used such that the ratios of the numbers of atoms of lithium, tantalum, niobium, boron, and phosphorus (Li:Ta:Nb:B:P) satisfied the stoichiometric formulas shown in Table 1.

### [Example 9]

A solid electrolyte was manufactured in the same manner as in Example 1 except that in Example 1, silicon oxide (SiO₂) (manufactured by FUJIFILM Wako Pure Chemical Corporation, purity of 99.9%) was further used, and each raw material powder was used such that the ratio of the numbers of atoms of lithium, tantalum, boron, phosphorus, and silicon (Li:Ta:B:P:Si) satisfied the stoichiometric formula shown in Table 1.

### [Comparative Example 1]

Lithium carbonate (Li₂CO₃) (manufactured by Sigma-Aldrich, Inc., purity of 99.0% or more), tantalum pentoxide (Ta₂O₅) (manufactured by FUJIFILM Wako Pure Chemical Corporation, purity of 99.9%), and diammonium hydrogen phosphate ((NH₄)₂HPO₄) (manufactured by Sigma-Aldrich, Inc., purity of 98% or more) were weighed such that the ratio of the numbers of atoms of lithium, tantalum, and phosphorus (Li:Ta:P) satisfied the stoichiometric formula shown in Table 1; further, considering a lithium atom flowing out of the system in the firing step, lithium carbonate was weighed in such a way as to provide an amount of 1.1 times the amount of lithium atoms in Table 1; and further, in order to suppress the generation of a by-product in the firing step, diammonium hydrogen phosphate was weighed in such a way as to provide an amount of 1.065 times the amount of phosphorus atoms in Table 1. An appropriate amount of toluene was added to the raw material powders thereof weighed, and these were pulverized and mixed for 2 hours using a zirconia ball mill (zirconia ball: diameter of 1 mm) to obtain a primary mixture.

The obtained primary mixture was placed in an alumina boat, and the temperature thereof was raised to 1000°C under a condition of a temperature rise rate of 10°C/min in an atmosphere of air (flow rate: 100 mL/min) using a rotary firing furnace (manufactured by Motoyama Co., Ltd.), and the mixture was fired at 1000°C for 4 hours to obtain a primary fired product.

The obtained primary fired product was pulverized and mixed in an agate mortar for 15 minutes to obtain a secondary mixture. The obtained secondary mixture was placed in an alumina boat, and the temperature thereof was raised to 1000°C under a condition of a temperature rise rate of 10°C/min in an atmosphere of air (flow rate: 100 mL/min) using a rotary firing furnace (manufactured by Motoyama Co., Ltd.), and the mixture was fired at 1000°C for 1 hour to obtain a secondary fired product.

An appropriate amount of toluene was added to the obtained secondary fired product, and this was pulverized and mixed for 2 hours using a zirconia ball mill (zirconia ball: diameter of 1 mm) to obtain a tertiary mixture.

Using a tableting machine, a pressure of 40 MPa was applied with a hydraulic press to the obtained tertiary mixture to form a disk-shaped tableted body having a diameter of 10 mm and a thickness of 1 mm, and next, a pressure of 300 MPa was applied to the disk-shaped tableted body by CIP (cold isostatic pressing) to manufacture a pellet.

The obtained pellet was placed in an alumina boat, and the temperature thereof was raised to 850°C under a condition of a temperature rise rate of 10°C/min in an atmosphere of air (flow rate: 100 mL/min) using a rotary firing furnace (manufactured by Motoyama Co., Ltd.), and the pellet was fired at the above temperature for 96 hours to obtain a sintered body.

The temperature of the obtained sintered body was lowered to room temperature, then taken out from the rotary firing furnace, transferred into a dehumidified nitrogen gas atmosphere, and stored to obtain a solid electrolyte.

### <X-ray diffraction (XRD)>

The obtained solid electrolyte was disintegrated using an agate mortar for 30 minutes to obtain a powder for XRD measurement.

Using a powder X-ray diffraction analyzer, PANalytical MPD (manufactured by Spectris Co., Ltd.), X-ray diffraction measurement of the obtained powder for XRD measurement (Cu-Kα radiation (output: 45 kV, 40 mA), diffraction angle 20 = range of 10 to 50°, step width: 0.013°, incident side Sollerslit: 0.04 rad, incident side Anti-scatter slit: 2°, light receiving side Sollerslit: 0.04 rad, light receiving side Anti-scatter slit: 5 mm) was carried out to obtain an X-ray diffraction (XRD) pattern. The crystal structures and the content of each of the crystal structures were confirmed by carrying out Rietveld analysis of the obtained XRD pattern using the known analysis software RIETAN-FP (available on creator; Fujio Izumi's website "RIETAN-FP/VENUS system distribution file"
(http://fujioizumi.verse.jp/download/download.html)).

The XRD patterns of the solid electrolytes obtained in Examples 4 and 6 and Comparative Example 1 are shown in Figure 1.

From Figure 1, in Comparative Example 1, only a peak derived from the LiTa₂PO₈ structure was observed. For the solid electrolyte obtained in Example 4, a peak derived from LiTa₃O₈ (ICSD code: 493) and a peak derived from Ta₂O₅ (ICSD code: 66366) in addition to a peak derived from the LiTa₂PO₈ structure, and for the solid electrolyte obtained in Example 6, a peak derived from TaPO₅ (ICSD code: 202041) was observed.

### <Relative density>

The mass of each of the manufactured solid electrolytes was measured using an electronic balance. Next, the volume was measured from the actual size of the solid electrolyte using a micrometer. The density (measured value) of the solid electrolyte was calculated by dividing the measured mass by the volume, and the relative density (%), which is the percentage of the ratio of the measured value to the theoretical value of the density of the solid electrolyte (measured value of density/theoretical value of density × 100), was calculated. Results are shown in Table 1.

The theoretical value of the density of the solid electrolyte was calculated by weighted averaging the theoretical density of the crystal structure based on LiTa₂PO₈ and the theoretical density of the crystal structure based on LiTa₃O₈, Ta₂O₅, and TaPO₅, constituting the solid electrolyte, using the content of each crystal structure obtained by Rietveld analysis.

### <Total conductivity>

A gold layer was formed on each of both sides of the obtained solid electrolyte using a sputtering machine to obtain a measurement pellet for ion conductivity evaluation.

The obtained measurement pellet was kept in a constant temperature bath at 25°C for 2 hours before measurement. Next, AC impedance measurement was carried out at 25°C in a frequency range of 1 Hz to 10 MHz under a condition of an amplitude of 25 mV using an impedance analyzer (manufactured by Solartron Analytical, model number: 1260A). The obtained impedance spectrum was fitted with an equivalent circuit using the equivalent circuit analysis software ZView included with the analyzer to determine the lithium ion conductivity within a crystal grain and the lithium ion conductivity at a crystal grain boundary, and these were added up to calculate the total conductivity. Results are shown together in Table 1.

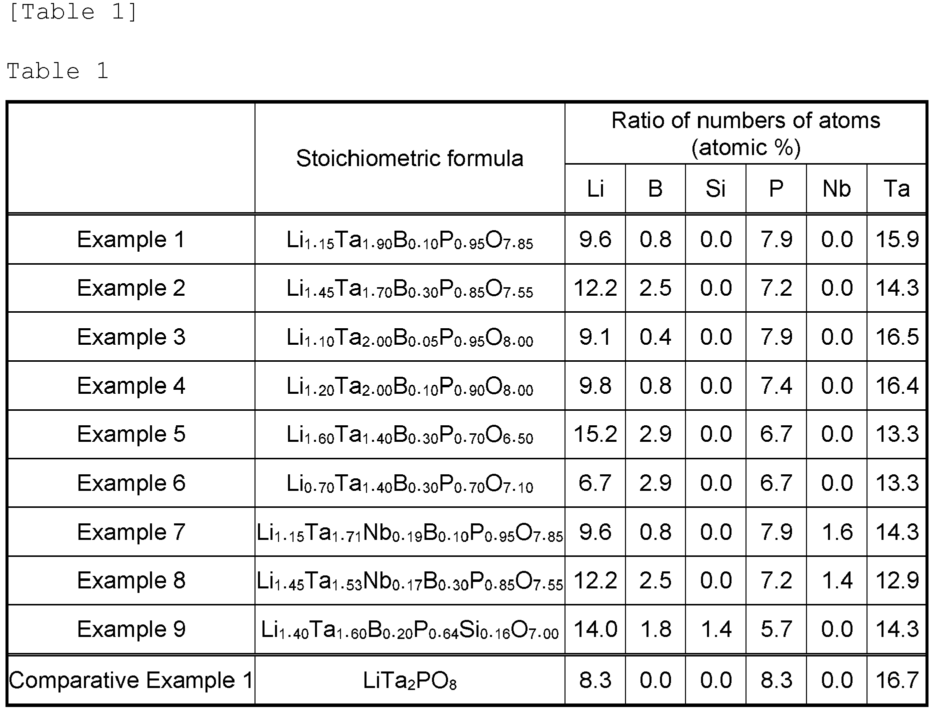

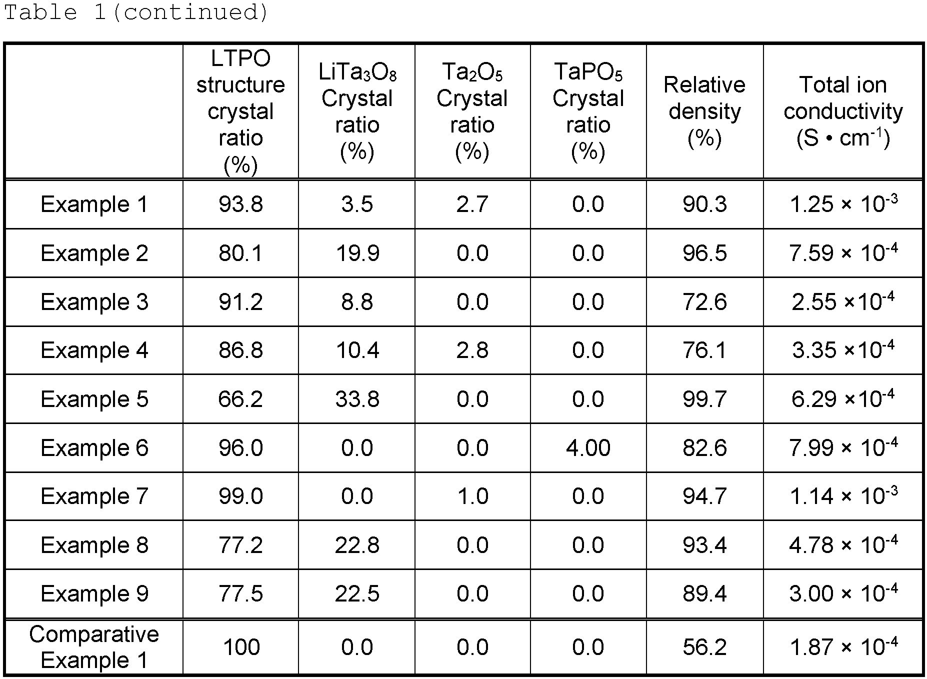

From Table 1, it can be seen that a solid electrolyte having a crystal structure based on LiTa₂PO₈ and a crystal structure based on at least one compound selected from LiTa₃O₈, Ta₂O₅, and TaPO₅, a solid electrolyte represented by the stoichiometric formula of Liₐ₁Ta_{b1}B_{c1}P_{d1}Oₑ₁ [where 0.5 < a1 < 2.0, 1.0 < b1 ≤ 2.0, 0 < c1 < 0.5, 0.5 < d1 < 1.0, and 5.0 < e1 ≤ 8.0], or a solid electrolyte represented by the stoichiometric formula of Liₐ₂Ta_{b2}Ma_{c2}B_{d2}Pₑ₂O_{f2} [where 0.5 < a2 < 2.0, 1.0 < b2 ≤ 2.0, 0 < c2 < 0.5, 0 < d2 < 0.5, 0.5 < e2 < 1.0, and 5.0 < f2 ≤ 8.0, and Ma is one or more elements selected from the group consisting of Nb, Zr, Ga, Sn, Hf, Bi, W, Mo, Si, Al, and Ge] has a good balance between the relative density and the conductivity although each thereof is a solid electrolyte obtained by firing at a low temperature.

## Claims

1. A lithium ion conductive solid electrolyte comprising:
a crystal structure based on LiTa₂PO₈; and
a crystal structure based on at least one compound selected from LiTa₃O₈, Ta₂O₅, and TaPO₅.

2. A lithium ion conductive solid electrolyte represented by a stoichiometric formula of Liₐ₁Ta_{b1}B_{c1}P_{d1}Oₑ₁ where 0.5 < a1 < 2.0, 1.0 < b1 ≤ 2.0, 0 < c1 < 0.5, 0.5 < d1 < 1.0, and 5.0 < e1 ≤ 8.0.

3. A lithium ion conductive solid electrolyte represented by a stoichiometric formula of Liₐ₂Ta_{b2}Ma_{c2}B_{d2}Pₑ₂O_{f2} where 0.5 < a2 < 2.0, 1.0 < b2 ≤ 2.0, 0 < c2 < 0.5, 0 < d2 < 0.5, 0.5 < e2 < 1.0, and 5.0 < f2 ≤ 8.0, and Ma is one or more elements selected from the group consisting of Nb, Zr, Ga, Sn, Hf, Bi, W, Mo, Si, Al, and Ge.

4. The lithium ion conductive solid electrolyte according to any one of claims 1 to 3, wherein a content of a tantalum element is 10.6 to 16.6 atomic %.

5. The lithium ion conductive solid electrolyte according to any one of claims 1 to 4, wherein a content of a phosphorus element is 5.3 to 8.3 atomic %.

6. The lithium ion conductive solid electrolyte according to any one of claims 1 to 5, wherein a content of a lithium element is 5.0 to 20.0 atomic %.

7. The lithium ion conductive solid electrolyte according to any one of claims 1 to 6, wherein the lithium ion conductive solid electrolyte comprises lithium, tantalum, phosphorus, and oxygen as constituent elements and comprises boron as a constituent element.

8. The lithium ion conductive solid electrolyte according to any one of claims 1 to 7, wherein the lithium ion conductive solid electrolyte comprises one or more elements Ma selected from the group consisting of Nb, Zr, Ga, Sn, Hf, Bi, W, Mo, Si, Al, and Ge as a constituent element.

9. The lithium ion conductive solid electrolyte according to any one of claims 1 to 8, wherein a relative density, which is a percentage of a ratio of a measured density calculated from a mass and a volume of the lithium ion conductive solid electrolyte to a theoretical density of crystal structures constituting the lithium ion conductive solid electrolyte, is 60% or more.

10. An all-solid-state battery, comprising:
a positive electrode having a positive electrode active material;
a negative electrode having a negative electrode active material; and
a solid electrolyte layer between the positive electrode and the negative electrode, wherein
the solid electrolyte layer comprises the lithium ion conductive solid electrolyte according to any one of claims 1 to 9.

11. The all-solid-state battery according to claim 10, wherein
the positive electrode active material comprises one or more compounds selected from the group consisting of LiM3PO₄, LiM5VO₄, Li₂M6P₂O₇, LiVP₂O₇, Liₓ₇V_{y7}M7_{z7}, Li₁₊ₓ₈Alₓ₈M8₂₋ₓ₈ (PO₄)₃, LiNi_{1/3}Co_{1/3}Mn_{1/3}O₂, LiCoO₂, LiNiO₂, LiMn₂O₄, Li₂CoP₂O₇, Li₃V₂(PO₄)₃, Li₃Fe₂(PO₄)₃, LiNi_{0.5}Mn_{1.5}O₄, and Li₄Ti₅O₁₂,
M3 is one or more elements selected from the group consisting of Mn, Co, Ni, Fe, Al, Ti, and V, or two elements V and O,
M5 is one or more elements selected from the group consisting of Fe, Mn, Co, Ni, Al, and Ti,
M6 is one or more elements selected from the group consisting of Fe, Mn, Co, Ni, Al, Ti, and V, or two elements V and O, 2 ≤ x7 ≤ 4, 1 ≤ y7 ≤ 3, 0 ≤ z7 ≤ 1, 1 ≤ y7 + z7 ≤ 3, and M7 is one or more elements selected from the group consisting of Ti, Ge, Al, Ga, and Zr, and
0 ≤ x8 ≤ 0.8, and M8 is one or more elements selected from the group consisting of Ti and Ge.

12. The all-solid-state battery according to claim 10 or 11, wherein
the negative electrode active material comprises one or more compounds selected from the group consisting of LiM3PO₄, LiM5VO₄, Li₂M6P₂O₇, LiVP₂O₇, Liₓ₇V_{y7}M7_{z7}, Li₁₊ₓ₈Alₓ₈M8₂₋ₓ₈(PO₄)₃, (Li_{3-a9x9+(5-b9)y9}M9ₓ₉)(V_{1-y9}M10_{y9})O₄, LiNb₂O₇, Li₄Ti₅O₁₂, Li₄Ti₃PO₁₂, TiO₂, LiSi, and graphite,
M3 is one or more elements selected from the group consisting of Mn, Co, Ni, Fe, Al, Ti, and V, or two elements V and O,
M5 is one or more elements selected from the group consisting of Fe, Mn, Co, Ni, Al, and Ti,
M6 is one or more elements selected from the group consisting of Fe, Mn, Co, Ni, Al, Ti, and V, or two elements V and O, 2 ≤ x7 ≤ 4, 1 ≤ y7 ≤ 3, 0 ≤ z7 ≤ 1, 1 ≤ y7 + z7 ≤ 3, and M7 is one or more elements selected from the group consisting of Ti, Ge, Al, Ga, and Zr,
0 ≤ x8 ≤ 0.8, and M8 is one or more elements selected from the group consisting of Ti and Ge, and
M9 is one or more elements selected from the group consisting of Mg, Al, Ga, and Zn, M10 is one or more elements selected from the group consisting of Zn, Al, Ga, Si, Ge, P, and Ti, 0 ≤ x9 ≤ 1.0, 0 ≤ y9 ≤ 0.6, a9 is an average valence of M9, and b9 is an average valence of M10.

13. The all-solid-state battery according to any one of claims 10 to 12, wherein the positive electrode and the negative electrode comprise the lithium ion conductive solid electrolyte according to any one of claims 1 to 9.
